# FASCICULE DE BREVET EUROPEEN

(11) **EP 1 406 374 B1**
(45) Date de publication et mention de la délivrance du brevet: **22.09.2010**
(21) Numéro de dépôt: 03292445.8
(22) Date de dépôt: 03.10.2003
(51) Int. Cl.: H02M 5/257

(54) **Dispositif d'alimentation électrique, notamment d'alimentation d'un commutateur de puissance**
Elektrische Speisevorrichtung, insbesondere zur Speisung eines Stromschalters
Electric supply device, in particular for the supply of a power switch

(30) Priorité: 03.10.2002 FR 0212220
(43) Date de publication de la demande: 07.04.2004
(73) Titulaire: Atlantic Industrie, 85000 La Roche sur Yon (FR)
(72) Inventeur: Bony, Yves, 85170 Dompierre sur Yon (FR)
(74) Mandataire: Kaspar, Jean-Georges

(56) Documents cités:
- US-A- 5 687 068

## Description

L'invention est relative à un dispositif d'alimentation électrique, notamment d'alimentation d'un commutateur de puissance.

L'invention est particulièrement utile pour l'alimentation d'un thermostat ou système analogue de commande du fonctionnement d'un appareil de chauffage électrique.

On connaît de nombreux dispositifs d'alimentation d'un thermostat ou système analogue de commande ou de contrôle de fonctionnement d'une résistance électrique à partir d'une alimentation générale en courant alternatif.

Les dispositifs de type connu alimentent généralement par au moins deux fils le thermostat ou système de commande, et ces thermostats ou systèmes de commande alimentent par au moins deux fils une charge telle qu'une résistance de chauffage électrique.

Les dispositifs de type connu présentent également une consommation importante en l'absence de fonctionnement de la résistance de chauffage électrique, ce qui entraîne des coûts indésirables et un échauffement constant du dispositif même à l'état de veille.

Un premier but de l'invention est d'alimenter un thermostat ou système analogue permettant de commander une charge en limitant le nombre de fils nécessaire, de préférence par un montage en série.

Un deuxième but de l'invention est de diminuer notablement la consommation et l'échauffement des circuits électriques à l'état de veille.

Le document US 5 687 068 décrit un dispositif d'alimentation électrique selon le préambule de la revendication 1 principale.

L'invention a pour objet un dispositif d'alimentation électrique d'une charge réceptrice, notamment d'une résistance de chauffage, comportant un transformateur à trois enroulements :
- un premier enroulement pour alimenter un moyen de commande, par exemple un thermostat, l'enroulement présentant une impédance faible par rapport au circuit branché en aval ;
- un deuxième enroulement et un troisième enroulement montés en série avec la charge réceptrice et la source de tension alternative d'alimentation, le deuxième enroulement présentant une faible impédance par rapport à la charge réceptrice et le troisième enroulement présentant une forte impédance par rapport à la charge réceptrice et à la tension alternative d'alimentation ;
- le deuxième enroulement étant connecté en série avec un moyen de commutation apte à commuter le dispositif entre un premier mode de fonctionnement et un mode de veille, le dispositif réalisant un mode de transformation de courant entre le premier enroulement et le deuxième enroulement dans le premier mode de fonctionnement et un mode de transformation de tension entre le premier enroulement et le troisième enroulement dans le mode de veille,
caractérisé par le fait quele dispositif comporte un moyen d'isolation connecté en série avec le troisième enroulement réalisant l'isolation du troisième enroulement dans le premier mode de fonctionnement.

Selon d'autres caractéristiques alternatives de l'invention :
- le transformateur comporte un enroulement à faible nombre de spires de fil de diamètre important, pour alimenter la charge réceptrice ou résistance de chauffage avec un courant important ;
- le transformateur comporte un enroulement à grand nombre de spires de fil de diamètre faible, de forte impédance par rapport à la charge réceptrice ou résistance de chauffage ;
- le transformateur comporte un enroulement en fil de diamètre faible relié à un pont redresseur fournissant une tension continue ;
- deux enroulements du transformateur sont montés en série avec la charge réceptrice et la source de tension alternative d'alimentation ;
- le dispositif comporte un moyen de commutation relié au point de jonction des deux enroulements du transformateur, pour commuter le dispositif entre un mode de fonctionnement et un mode de veille ;
- le moyen de commutation relié au point de jonction des deux enroulements du transformateur comporte un triac ;
- le moyen de commutation relié au point de jonction des deux enroulements du transformateur comporte un relais à contact commandé par bobine ;
- le dispositif comporte un moyen d'isolation d'un enroulement du transformateur, par exemple un relais inverseur ;
- le dispositif comporte deux moyens de commutation aptes à isoler un enroulement du transformateur dans le mode de fonctionnement, de manière à alimenter la charge réceptrice par un courant important parcourant un autre enroulement du transformateur.

L'invention sera mieux comprise grâce à la description qui va suivre donnée à titre d'exemple non limitatif en référence aux dessins annexés dans lesquels :
la Figure 1 représente schématiquement un circuit électrique relatif à un dispositif d'alimentation électrique d'une charge réceptrice, comportant un transformateur à trois enroulements;
la Figure 2 représente schématiquement un circuit électrique relatif à un dispositif d'alimentation électrique d'une charge réceptrice, comportant un transformateur à trois enroulements;
la Figure 3 représente schématiquement un circuit électrique relatif à un premier mode de réalisation d'un dispositif selon l'invention ;
la Figure 4 représente schématiquement un circuit électrique relatif à un deuxième mode de réalisation d'un dispositif selon l'invention.
la Figure 5 représente schématiquement un circuit électrique relatif à un dispositif d'alimentation électrique d'une charge réceptrice, comportant un transformateur à trois enroulements;
la Figure 6 représente schématiquement un circuit électrique relatif à un troisième mode de réalisation de dispositif selon l'invention.

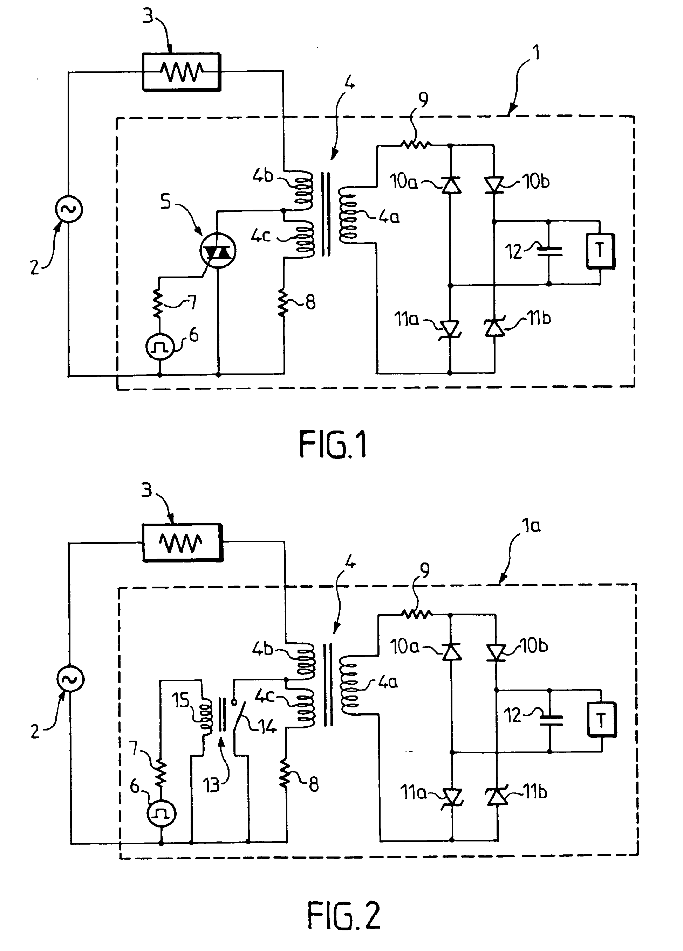

En référence aux Figures 1 à 6, les éléments identiques ou fonctionnellement équivalents sont repérés par des chiffres de référence identiques.

Sur la Figure 1, un dispositif 1 représenté à l'intérieur du cadre en traits interrompus est alimenté par une source de courant alternatif, par exemple par la tension alternative d'un réseau d'énergie électrique. Le dispositif 1 est relié en série avec une charge 3 réceptrice, par exemple une résistance électrique de chauffage.

Le dispositif comporte un transformateur 4 à trois enroulements 4a, 4b, 4c. L'enroulement 4a réalisé en fil de faible diamètre présente une impédance faible par rapport au circuit branché en aval.

L'enroulement 4b, réalisé en un nombre faible de spires de fil de gros diamètre, présente une impédance très faible par rapport à la charge réceptrice 3, de manière à éviter l'échauffement.

L'enroulement 4c réalisé en un nombre important de spires de fil de faible diamètre présente une forte impédance par rapport à la charge réceptrice 3 et par rapport à la tension 2 alternative d'alimentation.

Le transformateur 4 à trois enroulements 4a, 4b, 4c présente deux modes de fonctionnement : un mode de transformation de tension entre les enroulements 4a, 4c en fil de faible diamètre, et un mode de transformation de courant entre l'enroulement 4a en fil de faible diamètre et l'enroulement 4b en fil de diamètre important, destiné à alimenter la charge réceptrice 3.

La commutation entre les deux modes de fonctionnement du transformateur 4 est commandée par exemple par un triac 5 dont la gâchette est reliée à un générateur d'impulsions 6, par exemple un micro-contrôleur 6, avec interposition en série d'une résistance 7.

En mode de fonctionnement, un courant relativement important compris entre 1 et 20 ampères traversent l'enroulement 4b qui magnétise le circuit et qui alimente la charge réceptrice 3, par exemple une résistance de chauffage électrique, pour faire fonctionner la charge réceptrice 3 à des conditions nominales, par exemple pour délivrer une puissance de chauffage comprise entre 500 watts et 5 kilowatts.

Dans ce mode de fonctionnement, les enroulements 4a et 4c démagnétisent le circuit, l'enroulement 4c étant alimenté par l'intermédiaire d'une résistance 8 reliée en série avec l'enroulement 4c pour éviter de placer cet enroulement 4c en court-circuit et pour limiter un effet de démagnétisation de l'enroulement 4c susceptible de réduire la démagnétisation produite par l'enroulement 4a.

De préférence, on ajuste par construction les trois enroulements 4a, 4b et 4c du transformateur 4 pour obtenir aux bornes de l'enroulement 4a des tensions voisines pour les deux modes de fonctionnement du transformateur.

L'enroulement 4a alimente en aval un pont redresseur à double alternance par l'intermédiaire d'une résistance de lissage 9.

Le pont redresseur à double alternance avec écrêteur de tension comporte deux diodes 10a et 10b et deux diodes Zener 11a, 11b.

La tension continue fournie par le pont redresseur à quatre diodes 10a, 10b, 11a, 11b est stabilisée grâce à une capacité 12 et alimente un thermostat T ou système analogue de commande de la charge 3.

Le dispositif 1a de la Figure 2 comporte des éléments identiques ou fonctionnellement équivalents aux éléments décrits en référence à la Figure 1.

Les moyens de commutation du fonctionnement du transformateur 4 sont constitués sur la Figure 2 par un relais 13 dont le contact 14 est commandé par une bobine 15 commandée à son tour par un générateur d'impulsions 6 monté en série avec la résistance 7 et la bobine de commande 15.

Le transformateur 4 peut également commuter dans ce mode de réalisation entre deux modes de fonctionnement : un mode de fonctionnement d'alimentation de la charge 3 réceptrice et un mode de veille, dans lesquels la charge réceptrice 3 est alimentée avec une faible puissance.

Dans le mode de veille, la consommation électrique du circuit représenté à la Figure 2 est inférieure au dixième de la consommation électrique du circuit dans le mode de fonctionnement d'alimentation de la charge 3 par le transformateur 4.

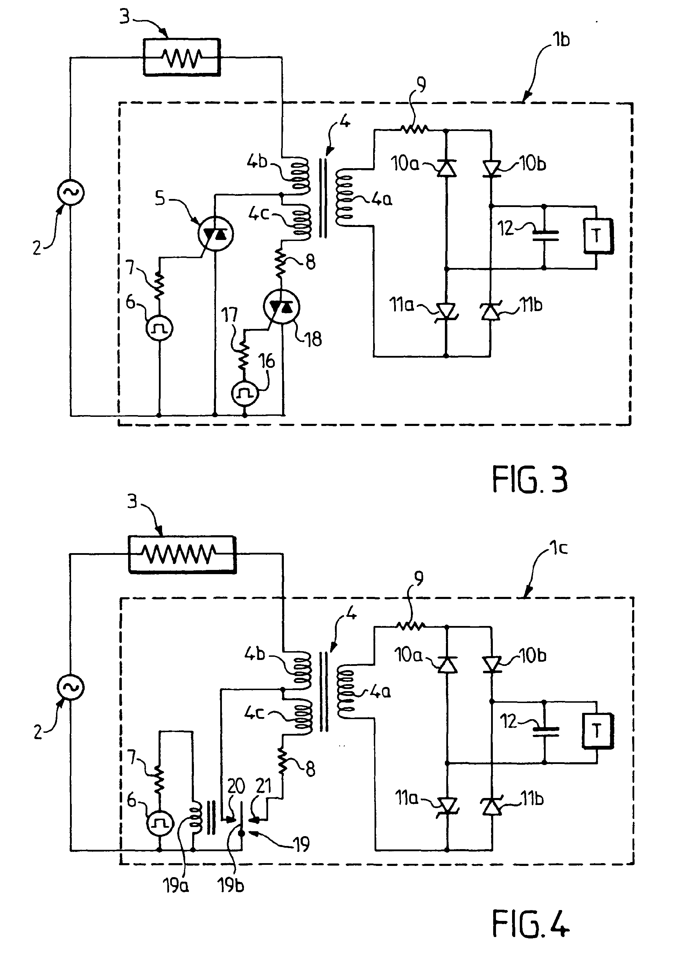

En référence à la Figure 3, un troisième mode 1b de réalisation du dispositif est relié en série avec une alimentation 2 électrique en tension alternative et une charge réceptrice 3.

Le dispositif de la Figure 3 comporte des éléments identiques ou fonctionnellement équivalents aux éléments des Figures 1 et 2 et repérés par des chiffres de référence identiques.

Le dispositif 1b de la Figure 3 diffère du dispositif 1 de la Figure 1 par la présence additionnelle d'un générateur d'impulsions 16 relié en série avec une résistance 17 pour commander un triac 18 relié à la résistance 8 en série avec l'enroulement 4c du transformateur 4.

Cette disposition permet une augmentation du rendement électrique du circuit, en raison du fait que le triac 18 commute en inverse par rapport au triac 5, de manière à isoler l'enroulement 4c du transformateur 4 en mode de fonctionnement d'alimentation à pleine puissance de la charge réceptrice 3.

Grâce à cette disposition, on peut réduire la valeur de la résistance 8, du fait que l'enroulement 4c ne risque plus d'être en court circuit ou de démagnétiser le circuit à la place de l'enroulement 4a dans le mode de fonctionnement d'alimentation à pleine puissance de la résistance ou charge réceptrice 3.

Les générateurs d'impulsions 6 et 16 peuvent être obtenus grâce à des sorties inversées d'un micro-contrôleur unique commandé ou faisant partie du thermostat T.

En référence à la Figure 4, un premier mode de réalisation 1c de dispositif selon l'invention est relié en série avec la charge réceptrice 3 et l'alimentation électrique 2.

Le dispositif 1c de la Figure 4 comporte des éléments identiques ou fonctionnellement équivalents aux éléments des Figures 1 à 3 et repérés par des chiffres de référence identiques.

Le dispositif 1c de la Figure 4 diffère du dispositif 1b de la Figure 3 par la présence d'un contact inverseur 19 commandé par une bobine 19a de manière à alimenter sélectivement la borne 20 reliée à la borne commune aux enroulements 4b et 4c, ou la borne 21 reliée à la résistance 8 en série avec l'enroulement 4c réalisé en un nombre important de spires de fil de faible diamètre.

La commande du contact inverseur 19 est effectuée par le générateur d'impulsions 6 en série avec la résistance 7 et avec la bobine 19a apte à commuter l'élément 19b entre la borne 20 et la borne 21.

Cette disposition permet également d'isoler l'enroulement 4c dans le mode de fonctionnement d'alimentation à pleine puissance de la charge réceptrice 3.

Les modes préférés de réalisation des Figures 3 et 4 permettent ainsi une réduction de la valeur de la résistance 8 et une diminution du nombre d'ampères-tours du transformateur 4.

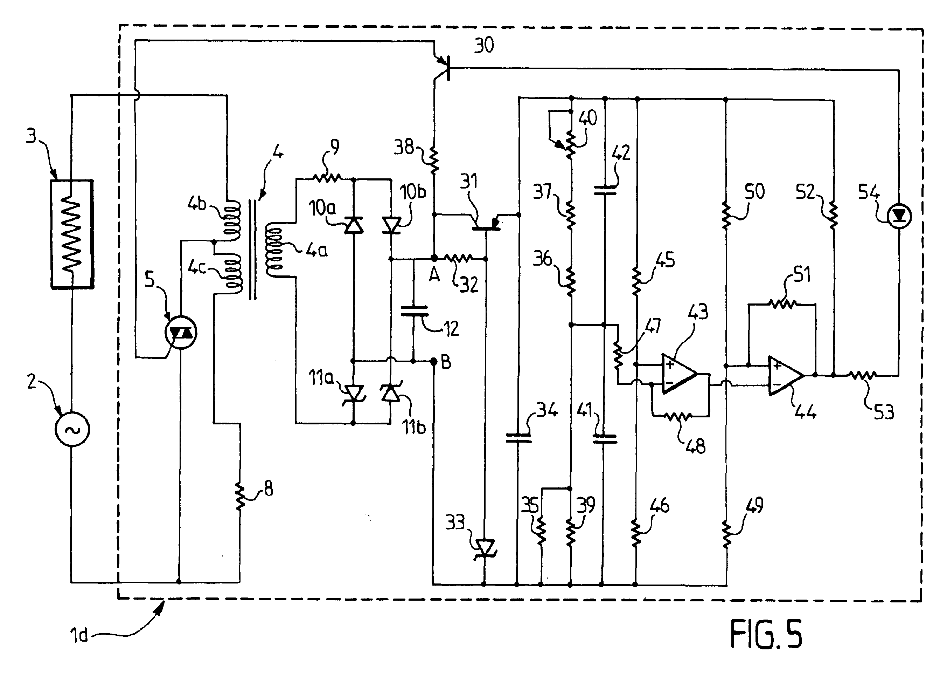

En référence à la Figure 5, un deuxième mode de réalisation 1d du dispositif selon l'invention est relié en série avec l'alimentation électrique 2 en tension alternative et la charge réceptrice 3.

Le dispositif de la Figure 5 comporte des éléments identiques ou fonctionnellement équivalents aux éléments des Figures 1 à 4 et repérés par des chiffres de référence identiques.

Le dispositif de la Figure 5 alimente entre les bornes A et B un circuit simplifié de thermostat relié à la gâchette du triac 5, de manière à commuter le fonctionnement du transformateur 4 entre les deux modes de fonctionnement à pleine puissance de la charge réceptrice 3 et le mode de veille.

Le circuit de thermostat relié en aval des bornes A et B comporte deux transistors 30 et 31, une résistance électrique 32, une diode Zener 33, un condensateur 34, et des résistances 35, 36, 37, 38, une résistance 39 CTN destinée par exemple à indiquer la température d'ambiance, une résistance 40 ajustable permettant de fixer une température de consigne, des condensateurs 41 et 42 et deux amplificateurs opérationnels 43 et 44.

L'amplificateur opérationnel 43 possède une entrée positive branchée entre les résistances 45 et 46 et une entrée négative reliée à la résistance 47 dont l'autre extrémité est reliée à un point milieu entre la résistance 39 de mesure de température et le potentiomètre 40 de consigne de température.

L'amplificateur opérationnel 43 effectue la sommation de ces entrées positive et négative et fournit un signal amplifié dépendant de la valeur de la résistance 48 de gain. Le signal amplifié émis par l'amplificateur opérationnel 43 est relié à une entrée négative de l'amplificateur opérationnel 44 d'hystérésis.

L'entrée positive de l'amplificateur 44 d'hystérésis est reliée au point milieu des résistances 49 et 50 et reçoit également le retour en boucle du courant passant par la résistance 51 d'hystérésis.

L'amplificateur 44 d'hystérésis fournit ainsi un signal amplifié lorsque la différence entre la température mesurée et la température de consigne est supérieure à une certaine valeur, de manière à éviter l'apparition de commutations continuelles de l'alimentation de puissance dans le cas d'une différence de température faible.

Des résistances 52 et 53 sont prévues en aval de l'amplificateur d'hystérésis 44, pour alimenter la diode électroluminescente indicatrice 54 et pour actionner le déclenchement de la gâchette du triac 5.

L'allumage de la diode électroluminescente 54 indique ainsi le fonctionnement du triac 5 et le passage d'un courant important par l'enroulement 4b réalisé en nombre faible de spires de diamètre important pour alimenter à pleine puissance la charge réceptrice 3.

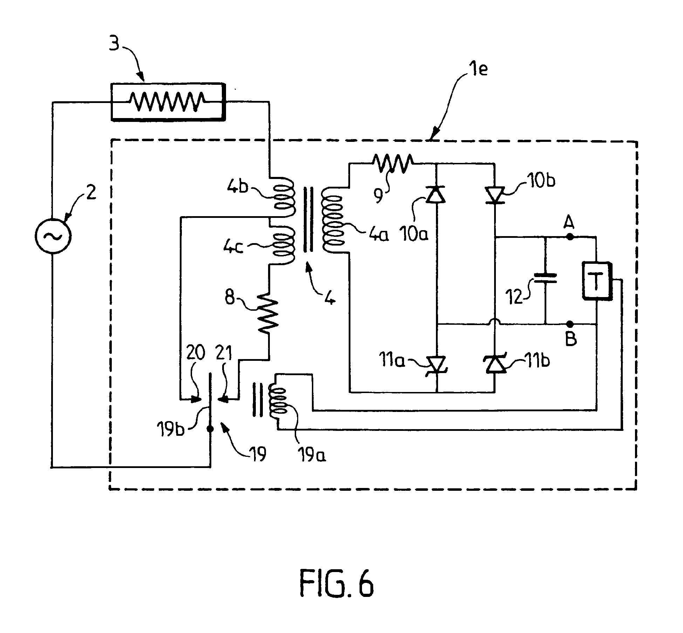

En référence à la figure 6, un troisième mode de réalisation 1e de dispositif selon l'invention est relié en série avec la charge réceptrice 3 et l'alimentation électrique 2.

Le dispositif 1e de la figure 6 comporte un contact inverseur 19 commandé par une bobine 19a de manière à alimenter sélectivement la borne 20 reliée à la borne commune aux enroulements 4b et 4c ou la borne 21 reliée à la résistance 8 en série avec l'enroulement 4c réalisé en un nombre important de spires de fil de faible diamètre.

La commande du contact inverseur 19 est effectuée par une sortie de thermostat T ou système analogue de commande.

Le thermostat T ou système analogue de commande peut présenter une très basse tension d'isolement, sans présenter de protection spécifique.

L'invention décrite en référence à plusieurs modes de réalisation particuliers n'y est nullement limitée, mais couvre au contraire toute modification de forme et toute variante de réalisation dans le cadre et l'esprit de l'invention, permettant de commuter l'alimentation d'une charge réceptrice 3 entre un mode de fonctionnement à pleine puissance et un mode de veille à consommation réduite.

Les avantages de l'invention obtenus pour les divers modes de réalisation permettent de réduire le câblage du fait du montage en série du dispositif selon l'invention avec l'alimentation électrique 2 et la charge réceptrice 3, permettent d'utiliser le circuit magnétique du transformateur pour améliorer le transfert et la dissipation thermique de l'élément de puissance qui assure la commutation, permettent d'améliorer la vitesse d'établissement de l'alimentation continue, offrent la possibilité de relier la masse d'un micro-contrôleur au neutre du triac de commutation et d'utiliser un redressement à double alternance grâce à l'isolation galvanique entre les enroulements primaires 4b, 4c et l'enroulement secondaire 4a.

En outre, la fabrication du dispositif selon l'invention est grandement facilitée grâce à l'absence d'un volumineux condensateur en polypropylène, grâce à la possibilité d'utiliser un convertisseur analogique numérique interne à un micro-contrôleur pour mesurer une valeur représentative de la tension alternative de l'alimentation 2 et une valeur représentative du courant d'alimentation de la charge réceptrice 3, grâce à la mesure de la tension induite sur l'enroulement secondaire 4a du dispositif selon l'invention. Ces mesures permettent une auto-adaptabilité des coefficients de régulation liés à la puissance réellement émise par une charge réceptrice 3 ou un corps de chauffe d'un appareil de chauffage électrique.

Cette disposition permet également une évaluation en continu de l'énergie consommée et une alimentation sans découpage de la charge réceptrice ou corps de chauffe 3, tout en bénéficiant d'une tension continue stable sur une grande plage de tension d'alimentation 2 et de charge réceptrice 3.

Enfin, la commande du relais 19 conformément à la Figure 6 permet de dissocier complètement l'alimentation électrique 2 du circuit de thermostat branché entre les bornes A et B et ainsi d'utiliser un thermostat présentant une très basse tension d'isolement ne nécessitant pas de protection spécifique

## Revendications

1. Dispositif d'alimentation électrique d'une charge (3) réceptrice, notamment d'une résistance de chauffage, comportant un transformateur (4) à trois enroulements :
un premier enroulement (4a) pour alimenter un moyen (T) de commande, par exemple un thermostat (T), l'enroulement présentant une impédance faible par rapport au circuit branché en aval ;
un deuxième enroulement (4b) et un troisième enroulement (4c) montés en série avec la charge réceptrice et la source de tension alternative d'alimentation, le deuxième enroulement présentant une faible impédance par rapport à la charge (3) réceptrice et le troisième enroulement présentant une forte impédance par rapport à la charge réceptrice et à la tension alternative d'alimentation ;
le deuxième enroulement (4b) étant connecté en série avec un moyen de commutation (5, 13, 19) apte à commuter le dispositif entre un premier mode de fonctionnement et un mode de veille, le dispositif réalisant un mode de transformation de courant entre le premier enroulement et le deuxième enroulement dans le premier mode de fonctionnement et un mode de transformation de tension entre le premier enroulement et le troisième enroulement dans le mode de veille,
**caractérisé par** le fait quele dispositif comporte un moyen d'isolation (18, 19) connecté en série avec le troisième enroulement réalisant l'isolation du troisième enroulement dans le premier mode de fonctionnement.).

2. Dispositif selon la revendication 1, **caractérisé par le fait que** le moyen de commutation est relié au point de jonction entre le deuxième enroulement (4b) et le troisième enroulement (4c) du transformateur (4).

3. Dispositif selon la revendication 2, **caractérisé par le fait que** le moyen de commutation (5, 13, 19)
comporte un triac (5).

4. Dispositif selon la revendication 2, **caractérisé par le fait que** le moyen de commutation (5, 13, *19)
comporte un relais (13) à contact (14) commandé par bobine (7).

5. Dispositif selon la revendication 2, **caractérisé par le fait que** le moyen d'isolation (19)
comporte un relais inverseur (19).

6. Dispositif selon la revendication 2 , **caractérisé par le fait que** le moyen d'isolation (18, 19) comporte un deuxième moyen de commutation (18) apte à isoler le troisième enroulement (4c) du transformateur (4) dans le premier mode de fonctionnement, de manière à alimenter la charge réceptrice (3) par un courant important parcourant le deuxième enroulement (4b) du transformateur (4)

## Claims

1. A device for electrically powering a receiver load (3), notably a heating resistor, including a transformer (4) with three windings:
a first winding (4a) for powering a control means (T) , for example a thermostat (T), the winding having low impedance relatively to the circuit connected downstream;
a second winding (4b) and a third winding (4c) mounted in series with the receiver load and the power supply AC voltage source, the second winding having low impedance relatively to the receiver load (3) and the third winding having high impedance relatively to the receiver load and the power supply AC voltage;
the second winding (4b) being connected in series with a switching means (5,13,19) capable of switching the device from a first operating mode and a standby mode, the device achieving a current transformation mode between the first winding and the second winding in the first operating mode and a voltage transformation mode between the first winding and the third winding in the standby mode,
**characterized by** the fact that the device includes an insulating means (18,19) connected in series with the third winding achieving insulation of the third winding in the first operating mode.

2. The device according to claim 1, **characterized by** the fact that the switching means is connected to the junction point between the second winding (4b) and the third winding (4c) of the transformer (4).

3. The device according to claim 2, **characterized by** the fact that the switching means (5, 13, 19) includes a triac (5).

4. The device according to claim 2, **characterized by** the fact that the switching means (5, 13, 19) includes a relay (13) with a contact (14) controlled by a coil (7).

5. The device according to claim 2, **characterized by** the fact that the insulating means (19) includes an inverting relay (19).

6. The device according to claim 2, **characterized by** the fact that the insulating means (18, 19) includes a second switching means (18) capable of insulating the third winding (4c) of the transformer (4) in the first operating mode so as to power the receiver load (3) with a large current flowing through the second winding (4b) of the transformer (4).

## Patentansprüche

1. Vorrichtung zur Stromversorgung einer empfangenden Stelle (3), vor allem eines Heizwiderstands, die einen Transformator (4) mit drei Wicklungen umfasst:
eine erste Wicklung (4a) zur Versorgung eines Steuermittels (T), zum Beispiel ein Thermostat (T), wobei die Wicklung im Verhältnis zum nachgeschalteten Kreis eine schwache Impedanz aufweist,
eine zweite Wicklung (4b) und eine dritte Wicklung (4c), die mit der empfangenden Stelle und der Quelle zur Versorgung mit Wechselspannung in Reihe geschaltet sind, wobei die zweite Wicklung im Verhältnis zu der empfangenden Stelle (3) eine schwache Impedanz aufweist und die dritte Wicklung im Verhältnis zu der empfangenden Stelle und zu der Versorgungs-Wechselspannung eine starke Impedanz aufweist,
wobei die zweite Wicklung (4b) mit einem Umschaltmittel (5, 13, 19) in Reihe geschaltet ist, das imstande ist, die Vorrichtung zwischen einem ersten Funktionsmodus und einem Überwachungsmodus umzuschalten, wobei die Vorrichtung einen Stromumwandlungsmodus zwischen der ersten Wicklung und der zweiten Wicklung im ersten Funktionsmodus und einen Spannungsumwandlungsmodus zwischen der ersten Wicklung und der dritten Wicklung im Überwachungsmodus durchführt,
**dadurch gekennzeichnet, dass** die Vorrichtung ein Isolationsmittel (18, 19) umfasst, das in Reihe mit der dritten Wicklung geschaltet ist und die Isolierung der dritten Wicklung im ersten Funktionsmodus durchführt.

2. Vorrichtung nach Anspruch 1, **dadurch gekennzeichnet dass** das Umschaltmittel am Verbindungspunkt zwischen der zweiten Wicklung (4b) und der dritten Wicklung (4c) des Transformators (4) angeschlossen ist.

3. Vorrichtung nach Anspruch 2, **dadurch gekennzeichnet, dass** das Umschaltmittel (5, 13, 19) einen Triac (5) umfasst.

4. Vorrichtung nach Anspruch 2, **dadurch gekennzeichnet, dass** das Umschaltmittel (5, 13, 19) ein durch Spule (7) gesteuertes Relais (13) mit Kontakt (14) umfasst.

5. Vorrichtung nach Anspruch 2, **dadurch gekennzeichnet, dass** das Isolationsmittel (19) ein Umschaltrelais (19) umfasst.

6. Vorrichtung nach Anspruch 2, **dadurch gekennzeichnet, dass** das Isolationsmittel (18, 19) ein zweites Umschaltmittel (18) umfasst, das imstande ist, die dritte Wicklung (4c) des Transformators (4) im ersten Funktionsmodus derart zu isolieren, dass die empfangende Stelle (3) mit einem hohen Strom versorgt wird, der die zweite Wicklung (4b) des Transformators (4) durchfließt.
